Europäisches Patentamt

European Patent Office

Office européen des brevets

(11) Publication number: **0 027 053**
A1

(12) **EUROPEAN PATENT APPLICATION**

(21) Application number: **80303538.5**

(22) Date of filing: **08.10.80**

(51) Int. Cl.³: **C 09 F 1/04,** B 01 F 17/00, C 08 F 36/04

(30) Priority: **09.10.79 GB 7934985**

(43) Date of publication of application: **15.04.81**
Bulletin 81/15

(84) Designated Contracting States: **BE DE FR IT NL SE**

(71) Applicant: **THE INTERNATIONAL SYNTHETIC RUBBER COMPANY LIMITED, Brunswick House Brunswick Place, Southampton Hampshire SO9 3AT (GB)**

(72) Inventor: **Timms, Donald George, Hilly Ground Hatchett Gate Beaulieu, Brockenhurst Hampshire (GB)**

(74) Representative: **Jones, Alan John et al, CARPMAELS & RANSFORD 43 Bloomsbury Square, London, WC1A 2RA (GB)**

(54) **Disproportionation of unsaturated acids.**

(57) Unsaturated acids in rosin or tall oil are disproportionated by heating the acids with a catalyst comprising iodine and iron chloride or iron bromide, preferably hydrated ferric chloride or bormide.

0027053

DISPROPORTIONATION OF UNSATURATED ACIDS

This invention relates to the disproportionation of unsaturated acids in rosin or tall oil.

Rosin consists of about 90% or more of mixed unsaturated acids. These are mainly isomeric rosin acids ($C_{19}H_{29}COOH$) but, in some cases, such as in tall oil rosin, a considerable proportion of fatty acids, mainly oleic and linoleic acid, is present as well. The composition of rosins from various sources (oleo rosin, gum rosin, wood rosin and tall oil rosin) is quoted in "Modern Surface Coatings" Paul Nylen et al, Interscience Publishers 1965, pages 133-137 and in particular in Table 4.22-2 on page 136. Rosin and rosin derivatives are also discussed in Encyclopedia of Chemical Technology, Volume 11, Interscience Publishers 1953, pages 779-810. One important use for rosin derivatives is as an emulsifier for free radical emulsion polymerisation processes. It is well known that crude, unmodified rosin is not suitable for such purposes since it contains a high proportion of abietic acid type acids (abietic, neoabietic and palustric acids). The conjugated double bond in these acids interferes with the polymerisation reaction. Processes for modifying the crude rosin to remove such acids are well known. These are broadly classified as hydrogenation, dehydrogenation or disproportionation, see the pages from Nylen, quoted above. Disproportionation is the preferred process since it is cheaper and simpler to carry out than the other two.

In the disproportionation reaction, two hydrogen atoms are transferred from one molecule of abietic acid to another, converting the conjugated structure to a simple double bond. The effect is that the abietic acid is theoretically converted into equimolar proportions of dehydro- and dihydro- abietic acid. If unsaturated fatty acids are present, as in tall oil, it is likely that a proportion of these undergo hydrogenation.

Although the disproportionation reaction can be effected by heating at 270°C for long periods, various catalysts have been used for many years to accelerate the process. For example, the disproportionation reaction may be accelerated by heating the crude acids in contact with a heterogeneous catalyst such as palladium-charcoal or nickel (see for example U.S. Patents 2,177,530 and 2,239,555). However, if the crude acids contain sulphur compounds, problems can arise, since these act as catalyst poisons. Furthermore, solubilisation of the catalyst metal may occur with deleterious results. Heating the crude acids with sulphur, both disproportionates and dehydrogenates abietic acid with the formation of hydrogen sulphide (see for example U.S. Patents 2,407,248 and 2,409,173). The reaction may be made more selective using iodine as cocatalyst, but generation of hydrogen sulphide is still a problem.

It has been known for many years that iodine alone catalyses the disproportionation of abietic acid (see Hasselstrom et al JACS 63 1759 (1941) and U.S. Patents 2,311,386, 2,299,577 and 3,277,072) but the reaction is slow unless a cocatalyst is employed. A number of metals/metal compounds can be used as cocatalyst but most of these are undesirable in the end product.

U.S. Patent No. 3,980,630, which contains references to prior art disproportionation reactions supplementing the above, claims a method of preparing an emulsifier comprising the steps of disproportionation reacting rosin, polyunsaturated fatty acid or mixture thereof in the presence of 0.01 to 5 weight percent iron iodide and neutralising the resulting product with alkali.

We have now found that an effective yet relatively inexpensive catalyst for the disproportionation of the unsaturated acids in rosin and tall oil comprises iodine and, as cocatalyst, iron chloride and/or bromide.

Thus according to the present invention a process for the disproportionation of the unsaturated acids in rosin or tall oil comprises heating the rosin or tall oil with a catalyst comprising iodine and iron chloride or bromide. For simplicity the term "rosin" is used hereafter to include tall oil except where the context indicates otherwise.

Both iron chloride and iron bromide are inexpensive, readily available materials. In contrast, iron iodide is both expensive and not readily available commercially. Furthermore, we find that when using iron chloride and/or iron bromide similar or superior results may be obtained, compared with the process claimed in U.S. Patent No. 3,980,630 and the amount of iodine required is considerably lower than the amount of iodine employed, as iron iodide, in the latter process. Thus, in the process of the invention the amount of iodine is, for example, 0.2% by weight based on the weight of rosin, whereas if iron iodide is used as the disproportionation catalyst the amount of iodine required (as iodide) is 0.3%. This makes the present process comparatively even more economical. Iron chloride and iron bromide both exhibit some disproportionation/dehydrogenation activity in the absence of iodine, but the combination with iodine gives a surprising increase in activity over and above the combined activity of the two components. Good results are obtained using a weight ratio of iron to iodine of 1:1 or a lower proportion of iodine. Thus the activity found for this system is not attributable to the formation of iron iodide, in situ. In any case, the electronegativities of the respective halogens are such that formation of iron iodide is theoretically unfavoured.

Ferrous chloride, ferrous bromide and anydrous ferric chloride and anhydrous ferric bromide may be used in the process of the invention, but these present problems in bringing into solution in the rosin. Hydrated ferric chloride and bromide are both readily soluble in rosin and are therefore preferred. When either of these is added to melted rosin, it melts then disperses with effervescence and the appearance of a transient deep grey-green colour. A coloured solid may also separate but, if so, it dissolves readily on stirring. When the ferric halide has dissolved, the colour of the melt is essentially the same as that of the original melt. When the iodine is added the melt turns dark brown but the colour quickly fades and as the mixture is heated to the reaction temperature, the colour fades to a pale yellow. These colour changes indicate reaction of both the iron halide and the iodine with the rosin.

The amount of iodine employed is at least 0.01% based on the weight of the rosin, but is preferably at least 0.1% since below this level the reaction may fail to reach completion, (i.e., residual abietic acid level exceeds 1%). This may be due to gradual loss of iodine, probably as hydrogen iodide. The upper limit is dictated purely by considerations of economy and the need to ensure that undue contamination of the product does not occur. Thus the amount of iodine employed would not normally exceed 3.0%. The preferred amount of iodine to use is 0.15% to 0.3%. The amount of iron chloride or bromide used may be, for example, 10:1 to 0.1:1 based on the weight of iodine, preferably 5:1 to 0.5:1 . Typical amounts are 0.1% to 0.2% w/w based on the weight of rosin. If desired the iron chloride or bromide may be dissolved in an appropriate solvent.

Elevated temperatures are used for the disproportionation reaction, for example, $100^\circ C$ to $300^\circ C$, preferably $200^\circ C$ to $300^\circ C$. In a typical procedure the rosin charge is first heated in a reactor to a temperature of $110^\circ C$ to $140^\circ C$ and stirred under a purge of inert, i.e., oxygen-free, gas. Ferric chloride hexahydrate (for example) is added in the amounts indicated above (for example, 0.1% to 0.2% w/w) and stirring is continued until the mixture is homogeneous. The iodine is then added and the melt heated to $220^\circ C$ to $230^\circ C$ without further purging and with the reactor vented through a liquid trap. Condensation on the head of the reactor is desirably avoided. The disproportionation reaction is continued until the conjugated acid content is reduced below 1%, typically for three hours. The melt is then cooled to $160^\circ C$ and then 0.2% by weight oxalic acid added, if desired, to remove residual iodine and to improve the colour of the project.

The invention includes a process for producing an emulsifier by neutralising the product of the process of the invention. It also includes the emulsion polymerisation of a conjugated diene, optionally with one or more comonomers (e.g., a vinyl aromatic, such as styrene) and especially the preparation of SBR latex or solid rubber, employing an emulsifier so prepared. Emulsifiers prepared by this method have been tested in standard SBR 1500 recipes. Polymerisation rates were similar to those obtained with commercial disproportionated rosins. The present of residual iron (from the catalyst) did not affect the polymerisation reaction in any way.

The progress of the disproportionation reaction is difficult to follow in view of the multiplicity of acids present in the reaction mixture. In our work we have used gas chromatography and UV spectroscopy to determine the rate of disappearance of the undesirable conjugated acids and the practical test of emulsion polymerisation to establish the quality of the final product.

As mentioned above, iodine has been known and used on its own as a catalyst for disproportionating rosin. The inclusion of iron chloride or iron bromide gives the surprising increase in activity referred to. Not only can the cost of the catalyst be reduced, since the amount of iodine required can be reduced (for example, 0.1-1%) but disproportionation may be achieved in the same time or shorter offering further economies. Furthermore, the process is much simpler than the sequential treatment employing sulphur and then iodine, which is used commercially. This sequential treatment is claimed in U.K. Patent No. 1,021,757, Example 4 of which shows, for comparison, the use of iodine alone. Sulphur is not required in our process and this is advantageous since problems of smell and industrial hazard associated with the generation of poisonous and explosive hydrogen sulphide do not arise. A beneficial side effect of this is that vapour losses and consequent loss of rosin oils from the system, can be reduced.

The mechanism of the reaction of the process of the invention is not understood. Whilst not wishing to be bound by any particular theory the catalytic action of the iron halide may be due to redox behaviour and/or the known reaction of such halides (a) to form complexes with organic acids and (b) to react with butadiene and possibly other conjugated dienes by halogenation. Some evidence for (a) may be derived by the reaction of ferric chloride hydrate referred to in the typical procedure quoted above. It may also be noted that hydrogen iodide is a reducing agent and can reduce dienes to olefins and further to the saturated hydrocarbon. Since this is a reversible reaction, in which iodine gives hydrogen iodide and vice versa, it is clear that the iodine in the present process may be formed in situ from hydrogen iodide used as the precursor. However, this procedure would not be recommended since it is both more expensive and less convenient. It is altogether preferable to add the iodine required in the present process as iodine, rather than to form it in situ.

A further advantage is that by adjustment of the process conditions (temperature, time, degree of condensation on the reactor top etc.) the softening point of the product can be varied to suit the end use required.

The invention is illustrated by the following Examples.

EXAMPLE 1

20 mg iodine, 40 mg ferric chloride hexahydrate and 20 g rosin were mixed by heating to melt the rosin. The rosin had an initial content of abietic acid of approximately 40% by weight. Portions of the mixture were poured into small test tubes which were fitted with vented caps. The test tubes were transferred to an oven heated to 215°C. Individual tubes were removed at different intervals and analysed by gas liquid chromatography (GLC) and also ultra violet spectroscopy.

The results were:

|     |         |     |              |     |
| --- | ------- | --- | ------------ | --- |
| (a) | 1 hour  | 9%  | abietic acid |     |
| (b) | 2 hours | 4%  | "            | "   |
| (c) | 3 hours | 2%  | "            | "   |
| (d) | 4 hours | 1%  | "            | "   |

EXAMPLE 2

Example 1 was repeated at 240°C with the following results:

|     |         |     |              |     |
| --- | ------- | --- | ------------ | --- |
| (a) | ½ hour  | 7%  | abietic acid |     |
| (b) | 1 hour  | 2%  | "            | "   |
| (c) | 2 hours | 1%  | "            | "   |

Similar results to those obtained in Examples 1 and 2 were obtained when ferric bromide hexahydrate was employed in equimolar ratio to the ferric chloride.

EXAMPLE 3

Example 2(b) was repeated using 0.2% iodine, 0.2% ferric chloride hexahydrate, heating for 1 hour at 240°C. This treatment reduced the abietic acid content to 0.32%.

CLAIMS

1. A process for the disproportionation of unsaturated acids in rosin or tall oil by heating the rosin or tall oil with a catalyst comprising iron chloride or bromide and at least 0.01% by weight of iodine based on the weight of rosin or tall oil.

2. A process according to claim 1 wherein hydrated ferric chloride or ferric bromide is used.

3. A process according to claim 1 or claim 2 wherein the weight of iodine is at least 0.1%.

4. A process according to any preceding claim wherein the weight ratio of iron chloride or bromide employed is 10:1 to 0.1:1 based on the weight of iodine.

5. A process according to any preceding claim wherein a temperature of $100^{\circ}C$ to $300^{\circ}C$ is employed.

6. A process for producing an emulsifier comprising neutralising the product of a process according to any one of claims 1 to 5.

7. A process for the emulsion polymerisation of a conjugated diene, optionally with one or more comonomers, employing an emulsifier produced by the process of claim 6.

European Patent Office

**EUROPEAN SEARCH REPORT**

0027053

Application number

EP 80 30 3538

| Category | Citation of document with indication, where appropriate, of relevant passages | Relevant to claim |
|---|---|---|
| X | <u>FR - A - 2 147 101</u> (TENNECO)  <br> * Page 28, claim 1; page 29, claim 10; page 10, lines 27-29; page 30, claims 18,19; page 8, lines 1-6; page 29, claim 11 * <br> -- | 1,3-5 |
| D,A | <u>US - A - 3 980 630</u> (MASAHISA ISHI-GAMI) <br> * Abstract; column 2, lines 63-65 * <br> ---- | 1,6,7 |

**CLASSIFICATION OF THE APPLICATION (Int. Cl.³)**

C 09 F 1/04
B 01 F 17/00
C 08 F 36/04

**TECHNICAL FIELDS SEARCHED (Int. Cl.³)**

C 09 F 1/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-01-1981 | GIRARD |

EPO Form 1503.1   06.78